# EUROPÄISCHE PATENTSCHRIFT

(11) **EP 2 730 751 B1**
(45) Veröffentlichungstag und Bekanntmachung des Hinweises auf die Patenterteilung: **31.01.2018**
(21) Anmeldenummer: 13191938.3
(22) Anmeldetag: 07.11.2013
(51) Int. Cl.: F01D 17/16, F02C 9/20

(54) **Leitschaufelverstellvorrichtung einer Gasturbine**
Vane adjustment device for a gas turbine
Dispositif de réglage d'aubes directrices d'une turbine à gaz

(30) Priorität: 07.11.2012 DE 102012021876
(43) Veröffentlichungstag der Anmeldung: 14.05.2014
(73) Patentinhaber: Rolls-Royce Deutschland Ltd & Co KG, 15827 Blankenfelde-Mahlow (DE)
(72) Erfinder: Klauke, Dr.-Ing. Thomas, 03222 Lübbenau/Spree (DE); Mojem, Mats, 12163 Berlin (DE); Rajaratnam, Nishanth, 77127 Lieusaint (FR)
(74) Vertreter: Hoefer & Partner Patentanwälte mbB

(56) Entgegenhaltungen:
- EP-A2- 2 650 490
- US-A- 3 801 216
- US-A- 5 692 879
- US-A1- 2010 080 684

## Beschreibung

Die Erfindung bezieht sich auf eine Leitschaufelverstellvorrichtung für einen Kompressor oder eine Turbine einer Gasturbine gemäß dem Oberbegriff des Anspruchs 1.

Im Einzelnen bezieht sich die Erfindung auf eine Leitschaufelverstellvorrichtung für einen Kompressor oder eine Turbine mit einer Vielzahl von jeweils um eine radiale Achse schwenkbaren Leitschaufeln, welche in zumindest zwei Radialebenen angeordnet sind. Die Leitschaufeln bilden somit jeweils eine zyklisch-symmetrische oder scheibenförmige Anordnung, wobei zwischen den zumindest zwei Leitschaufelanordnungen und/oder in Strömungsrichtung stromauf und stromab Laufschaufeln angeordnet sind, so wie dies aus dem Stand der Technik bekannt ist.

Zur Verstellung der Leitschaufeln jeder zyklisch-symmetrischen oder scheibenförmigen Anordnung von Leitschaufeln ist ein Leitschaufelverstellring vorgesehen, welcher in Umfangsrichtung verdrehbar ist. Der Leitschaufelverstellring ist mit der jeweiligen Leitschaufel über einen Hebelmechanismus gekoppelt, so dass bei einer Verdrehung des Leitschaufelverstellrings die Leitschaufeln um ihre radialen Achsen verschwenkt werden. Der Leitschaufelverstellring ist mit einer geeigneten Betätigungsvorrichtung gekoppelt.

Derartige Anordnungen sind beispielsweise aus der US 2005/0129510 A1, der US 5,692,879 oder der US 2006/0263206 A1 vorbekannt.

Mittels der Betätigungsvorrichtung ist es somit möglich, den Anstellwinkel der jeweiligen Leitschaufel den Betriebsbedingungen des Kompressors oder der Turbine anzupassen. Dabei kann sich bei den aus dem Stand der Technik bekannten Vorrichtungen der Nachteil ergeben, dass, durch die annähernd lineare Verstellung bzw. Verstellung mit annähernd festem Übersetzungsverhältnis des Leitschaufelverstellrings und damit der Leitschaufeln keine optimale Verstellung oder Einstellung der Leitschaufeln möglich ist. So ist es insbesondere nur möglich, über einen Teil-Betriebsbereich die Schaufeln optimal einzustellen, während bei anderen Betriebsbedingungen der Gasturbine die Schaufeln nicht mit einem optimalen Winkel eingestellt werden können. Dies führt zu erhöhtem Brennstoffverbrauch und birgt die Gefahr von Strömungsablösungen an den Schaufelprofilen. Weiterhin ist es erforderlich, bei einem Kompressor Ablassventile (bleed valves) vorzusehen. Hierdurch erhöht sich der gesamte Fertigungsaufwand der Gasturbine. Weiterhin ergibt sich ein größeres Gesamtgewicht.

Es wurde im Stand der Technik versucht, diese Effekte konstruktiv dadurch zu lösen, dass insbesondere die Leitschaufelverstellringe sowie deren Lagerung komplexer ausgebildet wurden oder die Anzahl der aktiven Betätigungsmechanismen erhöht wurde. Hieraus ergeben sich jedoch zusätzliche Kosten, zusätzliches Gewicht sowie ein größerer Platzbedarf.

Der Erfindung liegt die Aufgabe zugrunde, eine Leitschaufelverstellvorrichtung für einen Kompressor oder eine Turbine einer Gasturbine der eingangs genannten Art zu schaffen, welche bei einfachem Aufbau und einfacher, kostengünstiger Herstellbarkeit die Nachteile des Standes der Technik vermeidet und eine präzise Verstellung der Leitschaufeln ermöglicht.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass die Betätigungsvorrichtung ein Kurbelwellenelement umfasst, welches mittels eines Aktuators um eine ortsfeste Drehachse verschwenkbar ist. Das Kurbelwellenelement umfasst bevorzugterweise ein erstes und ein zweites Nockenelement, so wie dies bei üblichen Kurbelwellen vorgesehen ist. Bevorzugterweise ist das Kurbelwellenelement mit seiner Drehachse parallel zur Triebwerksachse und damit senkrecht zur Drehachse der Schaufeln angeordnet.

Die Betätigung des Kurbelwellenelements erfolgt erfindungsgemäß mittels eines Aktuators. Dieser kann als hydraulische Kolben-Zylindereinheit ausgebildet sein, es ist jedoch auch möglich, diesen als elektrischen Servoantrieb auszugestalten.

Die erfindungsgemäße Leitschaufelverstellvorrichtung umfasst zur Ausbildung eines Getriebes mit ausgeprägt nicht-konstanten Übersetzungsverhältnis drei Hebel, nämlich einen ersten Hebel, einen zweiten Hebel und einen dritten Hebel. Der erste Hebel ist gelenkig an dem Leitschaufelverstellring angelenkt, sein anderes, freies Ende ist gelenkig mit einem mittleren Bereich des zweiten Hebels verbunden. Der zweite Hebel ist an seinem einen Ende an einem ortsfesten Drehpunkt gelagert und an seinem anderen Ende gelenkig mit dem dritten Hebel gekoppelt. Dieser dritte Hebel wiederum ist mit seinem anderen, freien Ende gelenkig an dem Kurbelwellenelement gelagert. Durch eine Verdrehung des Kurbelwellenelements werden somit der erste und der dritte Hebel durch Zwischenschaltung des zweiten Hebels bewegt. Bei geeigneter Dimensionierung ergibt sich somit eine Bewegung (Verdrehung) des Leitschaufelverstellrings in Umfangsrichtung mit nicht-konstantem Übersetzungsverhältnis. Es erfolgt somit eine Umsetzung einer linearen, gleichmäßigen Bewegung des Aktuators in eine nicht-lineare Verstellung des Leitschaufelverstellrings und damit auch in eine nicht-lineare Einstellung der Schaufeln. Hierdurch ist es möglich, einen optimalen Anstellwinkel der Schaufeln für jede Drehzahl der Gasturbine zu realisieren.

Die ortsfesten Drehpunkte können in geeigneter Weise im Hinblick auf das gewünschte nicht-konstante Übersetzungsverhältnis des durch die drei Hebel gebildeten Getriebes ausgewählt und den jeweiligen konstruktiven Bedingungen angepasst werden.

Durch die erfindungsgemäße Ausgestaltung ergibt sich für alle Betriebsbedingungen der Gasturbine ein optimaler Anstellwinkel der Leitschaufeln. Dies führt zu einer verbesserten Verbrennung sowie verbesserten Strömungsbedingungen und einer besseren Bedienbarkeit der Gasturbine. Weiterhin ergeben sich wegen der geringeren Anzahl der benötigten Bauteile und der einfacheren Ausgestaltung der Bauteile geringere Kosten. Gegebenenfalls kann auf die aus dem Stand der Technik bekannten Auslassventile (bleed valves) verzichtet werden.

Wie bereits erwähnt, ist es möglich, insbesondere den ortsfesten Drehpunkt, um den sich der zweite Hebel dreht, konstruktiv optimiert anzuordnen, beispielsweise radial innenliegend oder radial außenliegend (bezogen auf die Maschinenachse) zu dem Kurbelwellenelement.

In besonders günstiger Ausgestaltung ist vorgesehen, dass der Aktuator über einen Zwischenhebel mit dem Kurbelwellenelement verbunden ist. Somit ist es möglich, den Aktuator an einem günstigen Einbauort vorzusehen und eine optimierte Krafteinleitung von dem Aktuator auf das Nockenelement zu gewährleisten.

Erfindungsgemäß ist es weiterhin möglich, mehrere Leitschaufelringe mit der erfindungsgemäßen Vorrichtung unter Verwendung eines gemeinsamen Kurbelwellenelements und eines Aktuators zu verstellen.

Im Folgenden wird die Erfindung anhand von Ausführungsbeispielen in Verbindung mit der Zeichnung beschrieben. Dabei zeigt:
- Fig. 1: eine schematische Darstellung eines Gasturbinentriebwerks gemäß der vorliegenden Erfindung;
- Fig. 2: eine perspektivische Teilansicht eines Kompressors mit verstellbaren Leitschaufeln und Leitschaufelverstellringen;
- Fig. 3 - 5: unterschiedliche Betriebszustände eines ersten Ausführungsbeispiels der Erfindung in vereinfachter Darstellung;
- Fig. 6: eine schematische Ansicht, ähnlich den Figuren 3 bis 5, eines weiteren Ausführungsbeispiels der Erfindung, und
- Fig. 7: eine graphische Darstellung der Verdeutlichung des nicht-konstanten Übersetzungsverhältnisses der Verstellung gemäß der Erfindung.

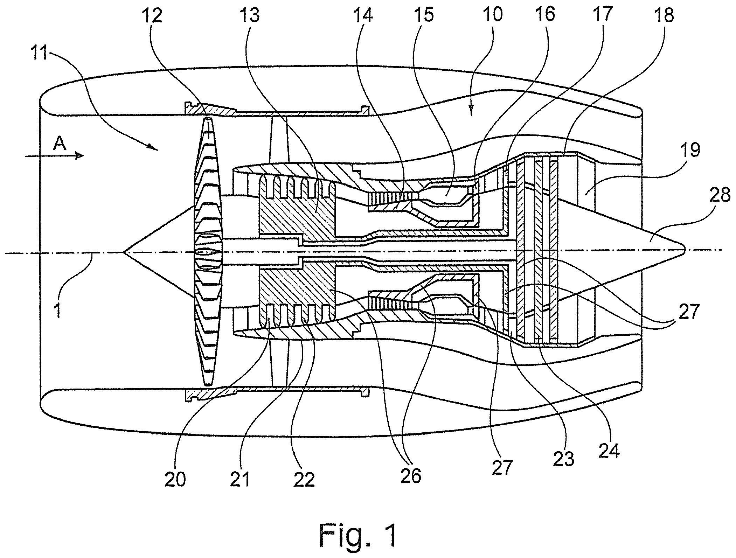

Das Gasturbinentriebwerk 10 gemäß Fig. 1 ist ein Beispiel einer Turbomaschine, bei der die Erfindung Anwendung finden kann. Aus dem Folgenden wird jedoch klar, dass die Erfindung auch bei anderen Turbomaschinen verwendet werden kann. Das Triebwerk 10 ist in herkömmlicher Weise ausgebildet und umfasst in Strömungsrichtung hintereinander einen Lufteinlass 11, einen in einem Gehäuse umlaufenden Bläser (Fan) 12, einen Mitteldruckkompressor 13, einen Hochdruckkompressor 14, eine Brennkammer 15, eine Hochdruckturbine 16, eine Mitteldruckturbine 17 und eine Niederdruckturbine 18 sowie eine Abgasdüse 19, die sämtlich um eine zentrale Triebwerksachse 1 angeordnet sind.

Der Mitteldruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Triebwerksgehäuse 21 in einem ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Mitteldruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenlaufschaufeln 24 drehen sich im Betrieb um die Triebwerksachse 1.

Die Erfindung wird nachfolgend anhand eines Kompressors beschrieben, sie ist jedoch auch für Leitschaufeln einer Turbine anwendbar.

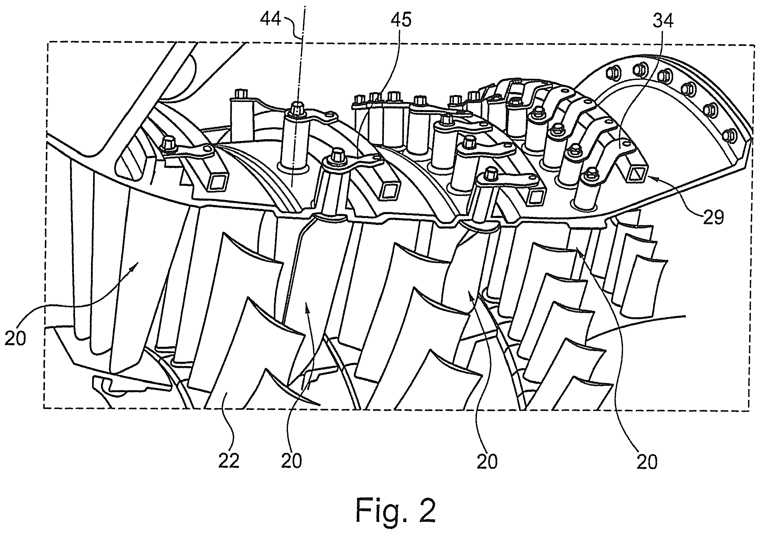

Die Fig. 2 zeigt eine perspektivische Teilansicht eines Kompressors mit mehreren Reihen von verstellbaren Leitschaufeln 20, zwischen denen jeweils Kompressorlaufschaufeln 22 angeordnet sind. Die einzelnen Leitschaufeln 20 sind jeweils um eine radiale Achse 44 verschwenkbar. Sie sind mit einem Hebel 45 verbunden, welcher an seinem gegenüberliegenden Endbereich mit einem Leitschaufelverstellring 29 drehbar gekoppelt ist. Durch eine Verdrehung des Leitschaufelverstellrings 29 in Umfangsrichtung erfolgt eine Verschwenkung der einzelnen Hebel 45. Hierdurch wird eine Verdrehung der Leitschaufeln 20 um die jeweilige Achse 44 bewirkt.

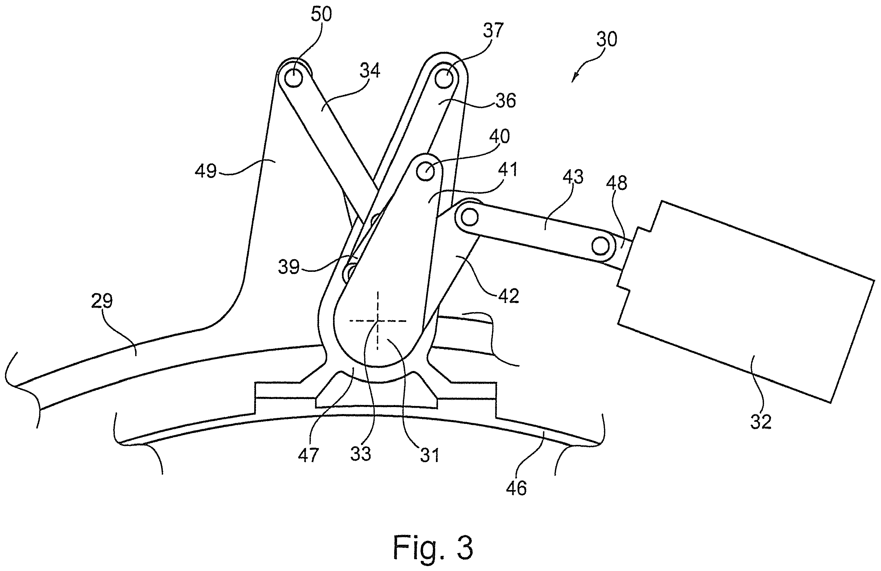

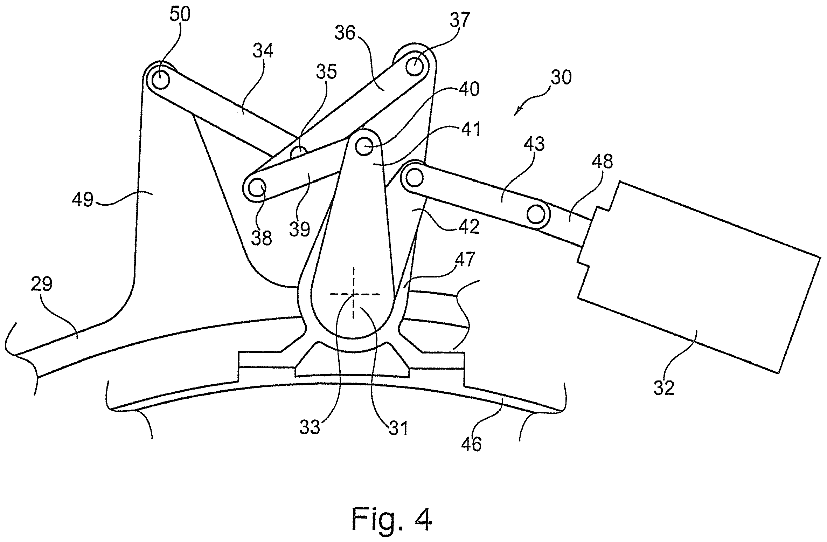

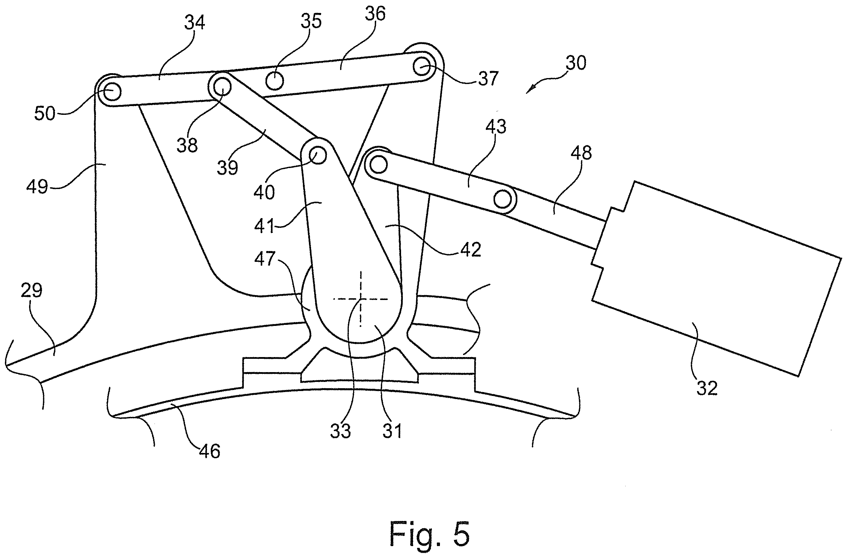

Die Figuren 3 bis 5 zeigen ein erstes Ausführungsbeispiel der Erfindung in schematischer Seitenansicht. Dabei ist mittels eines Lagerbocks 47 ein um eine ortsfeste Drehachse 33 drehbares Kurbelwellenelement 31 gelagert. Dieses umfasst ein erstes Nockenelement 41 sowie ein zweites Nockenelement 42.

Das zweite Nockenelement ist über einen Zwischenhebel 43 mit einem Aktuator 32 verbunden. Dieser umfasst ein Betätigungselement 48, welches längsverschiebbar ist, sowie sich dies aus dem Vergleich der Figuren 3 bis 5 ergibt. Es versteht sich, dass der Zwischenhebel 43 gelenkig mit dem Betätigungselement 48 sowie dem zweiten Nockenelement 42 verbunden ist.

Weiterhin zeigen die Figuren 3 bis 5 den Leitschaufelverstellring 29, welcher in Umfangsrichtung verschiebbar ist, um, wie im Zusammenhang mit Figur 2 erläutert, die Leitschaufeln 20 zu verstellen. An dem Leitschaufelverstellring 29 ist ein Lageransatz 49 befestigt, welcher über ein Drehgelenk 50 mit einem ersten Hebel 34 verbunden ist. Das gegenüberliegende Ende des ersten Hebels 34 ist mittels eines Gelenks 35 mit dem mittleren Teil eines zweiten Hebels 36 gekoppelt. Der zweite Hebel 36 ist an seinem einen Ende mittels eines ortsfesten Drehpunkts 37 an dem Gehäuse 46 gelagert, während das andere Ende des zweiten Hebels 36 mittels eines Gelenks 38 mit einem dritten Hebel 39 gekoppelt ist. Der dritte Hebel 39 wiederum ist an seinem anderen Ende mittels eines Gelenks 40 an dem ersten Nockenelement 41 befestigt.

Durch eine Verschiebung des Betätigungselements 48 (vgl. die Figuren 3 bis 5), ergibt sich somit eine Verdrehung des Kurbelwellenelements 31 um die ortsfeste Drehachse 33. Hieraus resultiert eine Verschwenkung des ersten Nockenelements 41. Dieses verschwenkt mittels des dritten Hebels 39 den zweiten Hebel 36, wodurch der erste Hebel 34 verschwenkt wird und den Leitschaufelverstellring 29 verschiebt.

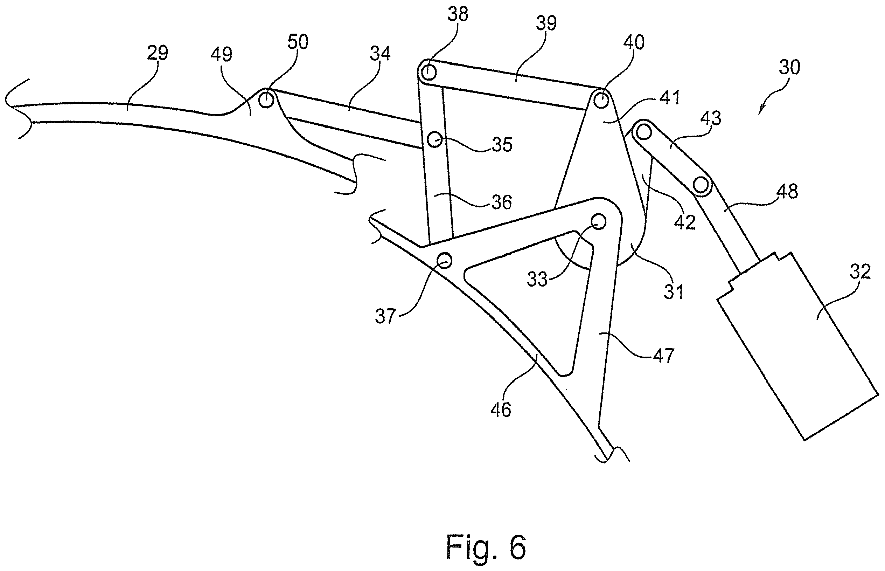

Die Figur 6 zeigt ein abgewandeltes Ausführungsbeispiel, welches sich von dem Ausführungsbeispiel der Figuren 3 bis 5 hinsichtlich der Lage des ortsfesten Drehpunkts 37 unterscheidet. Dieser ist gemäß Figur 6 nahe am Gehäuse 46 angeordnet, während das Ausführungsbeispiel der Figuren 3 bis 5 den Drehpunkt 37 einem radial äußeren Bereich des Lagerbocks 47 vorsieht.

Ansonsten sind bei den Ausführungsbeispielen der Figuren 3 bis 6 jeweils gleiche Teile mit gleichen Bezugsziffern versehen.

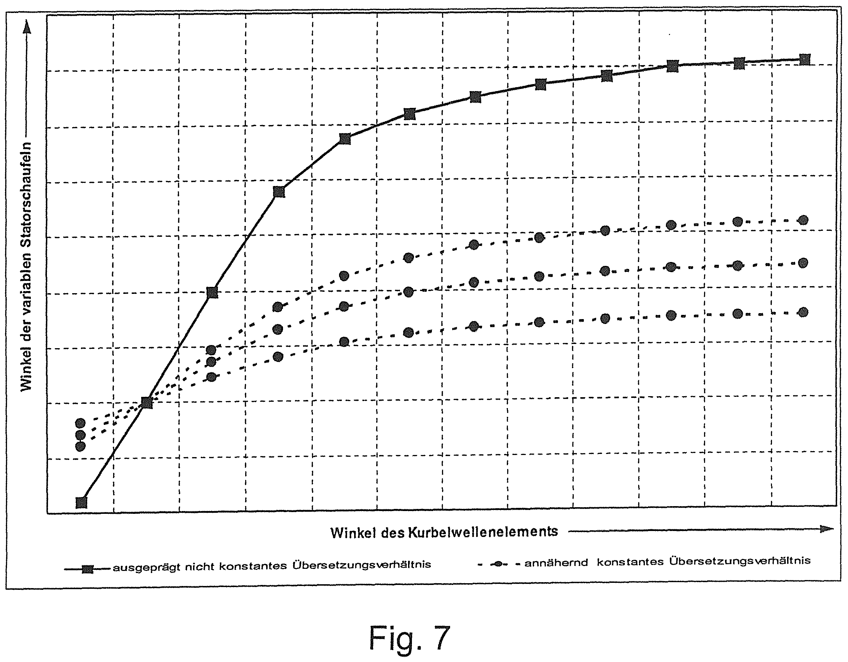

Die Figur 7 zeigt eine vereinfachte graphische Darstellung, welche das deutlich nicht-konstante erfindungsgemäße Übersetzungsverhältnis im Vergleich zu dem annähernd konstanten Übersetzungsverhältnis nach dem Stand der Technik verdeutlicht. Dabei ist der Winkel des Kurbelwellenelements gegen den Schaufelwinkel abgebildet.

### Bezugszeichenliste:

- 1: Triebwerksachse
- 10: Gasturbinentriebwerk
- 11: Lufteinlass
- 12: im Gehäuse umlaufender Fan
- 13: Mitteldruckkompressor
- 14: Hochdruckkompressor
- 15: Brennkammer
- 16: Hochdruckturbine
- 17: Mitteldruckturbine
- 18: Niederdruckturbine
- 19: Abgasdüse
- 20: Verdichterleitschaufeln
- 21: Triebwerksgehäuse
- 22: Kompressorlaufschaufeln
- 23: Turbinenleitschaufeln
- 24: Turbinenschaufeln
- 26: Kompressortrommel oder -scheibe
- 27: Turbinenrotornabe
- 28: Auslaufkonus
- 29: Leitschaufelverstellring
- 30: Betätigungsvorrichtung
- 31: Kurbelwellenelement
- 32: Aktuator
- 33: ortsfeste Drehachse
- 34: erster Hebel
- 35: Gelenk
- 36: zweiter Hebel
- 37: ortsfester Drehpunkt
- 38: Gelenk
- 39: dritter Hebel
- 40: Gelenk
- 41: erstes Nockenelement
- 42: zweites Nockenelement
- 43: Zwischenhebel
- 44: Achse
- 45: Hebel
- 46: Gehäuse
- 47: Lagerbock
- 48: Betätigungselement
- 49: Lageransatz
- 50: Gelenk

## Patentansprüche

1. Leitschaufelverstellvorrichtung einer Gasturbine, mit einer Vielzahl von jeweils um eine radiale Achse (44) schwenkbaren Leitschaufeln (20), welche in zumindest zwei Radialebenen angeordnet sind, sowie mit zumindest einem Leitschaufelverstellring (29), welcher mit den jeweiligen Leitschaufeln (20) gekoppelt ist und mittels zumindest einer Betätigungsvorrichtung (30) in Umfangsrichtung drehbar ist, wobei die Betätigungsvorrichtung (30) ein Kurbelwellenelement (31) umfasst, welches mittels eines Aktuators (32) um eine ortsfeste Drehachse (33) verschwenkbar ist, und wobei die Leitschaufelverstellvorrichtung einen ersten, zweiten und dritten Hebel aufweist, **dadurch gekennzeichnet, dass** an dem Leitschaufelverstellring (29) gelenkig der erste Hebel (34) angelenkt ist, dessen freies Ende gelenkig (35) mit einem mittleren Bereich des zweiten Hebels (36) verbunden ist, wobei der zweite Hebel (36) an seinem einen Ende an einem ortsfesten Drehpunkt (37) gelagert ist und an seinem anderen Ende gelenkig (38) mit dem dritten Hebel (39) gekoppelt ist, welcher an seinem freien Ende gelenkig (40) an dem Kurbelwellenelement (31) gelagert ist.

2. Vorrichtung nach Anspruch 1, **dadurch gekennzeichnet, dass** der ortsfeste Drehpunkt (37) des zweiten Hebels (36) radial, bezogen auf die Triebwerksachse (1) der Gasturbine innenliegend zu dem Kurbelwellenelement (31) angeordnet ist.

3. Vorrichtung nach Anspruch 1, **dadurch gekennzeichnet, dass** der ortsfeste Drehpunkt (37) des zweiten Hebels (36) radial, bezogen auf die Triebwerksachse (1) der Gasturbine außenliegend zu dem Kurbelwellenelement (31) angeordnet ist.

4. Vorrichtung nach einem der Ansprüche 1 bis 3, **dadurch gekennzeichnet, dass** das Kurbelwellenelement (31) zumindest ein erstes (41) und ein zweites (42) Nockenelement umfasst, wobei der dritte Hebel 39 an dem ersten Nockenelement (41) angelenkt ist und der Aktuator (32) mit dem zweiten Nockenelement (42) gekoppelt ist.

5. Vorrichtung nach einem der Ansprüche 1 bis 4, **dadurch gekennzeichnet, dass** der Aktuator (32) über einen Zwischenhebel (43) mit dem Kurbelwellenelement (31) verbunden ist.

6. Vorrichtung nach einem der Ansprüche 1 bis 5, **dadurch gekennzeichnet, dass** mehrere Leitschaufelverstellringe (29) vorgesehen sind, welche jeweils mittels eines ersten (34), zweiten (36) und dritten (39) Hebels mit dem Kurbelwellenelement (31) gekoppelt sind.

7. Vorrichtung nach einem der Ansprüche 1 bis 6, **dadurch gekennzeichnet, dass** diese zur Umwandlung einer linearen Betätigung des Aktuators (32) in eine nicht-lineare Verdrehung des Leitschaufelverstellrings (29) ausgebildet ist.

8. Vorrichtung nach einem der Ansprüche 1 bis 7, **dadurch gekennzeichnet, dass** die Längen des ersten (34), zweiten (36) und dritten (39) Hebels zur Bildung eines Getriebes mit ausgeprägt nicht-konstantem Übersetzungsverhältnis ausgebildet sind.

## Claims

1. Stator vane adjusting device of a gas turbine having a plurality of stator vanes (20) each swivellable about a radial axis (44) and arranged in at least two radial planes, as well as at least one stator vane adjusting ring (29) coupled to the respective stator vanes (20) and rotatable in the circumferential direction by at least one actuating device (30), with the actuating device (30) including a crankshaft element (31) swivellable about a stationary pivot axis (33) by means of an actuator (32), and the stator vane adjusting device featuring a first, a second and a third lever, **characterized in that** the first lever (34) is articulated by a joint to the stator vane adjusting ring (29), with its free end being connected by a joint (35) to a center area of the second lever (36), with the second lever (36) being mounted at its one end on a stationary pivot point (37) and at its other end being linked by a joint (38) to the third lever (39), which is mounted by a joint (40) at its free end on the crankshaft element (31).

2. Device in accordance with Claim 1, **characterized in that** the stationary pivot point (37) of the second lever (36) is arranged radially inside the crankshaft element (31) relative to the engine axis (1) of the gas turbine.

3. Device in accordance with Claim 1, **characterized in that** the stationary pivot point (37) of the second lever (36) is arranged radially outside the crankshaft element (31) relative to the engine axis (1) of the gas turbine.

4. Device in accordance with one of the Claims 1 to 3, **characterized in that** the crankshaft element (31) includes at least a first (41) and a second (42) cam element, with the third lever (39) being articulated to the first cam element (41) and the actuator (32) being coupled to the second cam element (42).

5. Device in accordance with one of the Claims 1 to 4, **characterized in that** the actuator (32) is connected to the crankshaft element (31) via an intermediate lever (43).

6. Device in accordance with one of the Claims 1 to 5, **characterized in that** several stator vane adjusting rings (29) are provided which are each coupled to the crankshaft element (31) by means of a first (34), a second (36) and a third (39) lever.

7. Device in accordance with one of the Claims 1 to 6, **characterized in that** the latter is designed for converting a linear movement of the actuator (32) into a non-linear rotation of the stator vane adjusting ring (29).

8. Device in accordance with one of the Claims 1 to 7, **characterized in that** the lengths of the first (34), the second (36) and the third (39) lever are selected such that a gear with a distinctly non-constant transmission ratio is provided.

## Revendications

1. Dispositif d'ajustage d'aubes directrices d'une turbine à gaz avec une multitude d'aubes directrices (20) pouvant pivoter chacune autour d'un axe radial (44), lesquelles aubes directrices sont disposées dans au moins deux niveaux radiaux, et avec au moins une bague d'ajustage d'aubes directrices (29) qui est couplée aux aubes directrices respectives (20) et qui peut être tournée dans le sens circonférentiel au moyen d'au moins un dispositif d'actionnement (30), sachant que le dispositif d'actionnement (30) comprend un élément de vilebrequin (31) qui peut pivoter autour d'un axe de rotation stationnaire (33) au moyen d'un actionneur (32) et que le dispositif d'ajustage d'aubes directrices présente un premier, un deuxième et un troisième levier, **caractérisé en ce que** le premier levier (34) est articulé par un joint au niveau de la bague d'ajustage d'aubes directrices (29), l'extrémité libre dudit premier levier étant reliée par un joint (35) à une zone médiane du deuxième levier (36), sachant que le deuxième levier (36) est monté, au niveau d'une de ses extrémités, sur un point de rotation stationnaire (37) et est couplé, par un joint (38) au niveau de son autre extrémité, au troisième levier (39), lequel est monté sur l'élément de vilebrequin (31) par un joint (40) au niveau de son extrémité libre.

2. Dispositif selon la revendication n° 1, **caractérisé en ce que** le point de rotation stationnaire (37) du deuxième levier (36) est disposé radialement à l'intérieur de l'élément de vilebrequin (31) par rapport à l'axe du moteur (1) de la turbine à gaz.

3. Dispositif selon la revendication n° 1, **caractérisé en ce que** le point de rotation stationnaire (37) du deuxième levier (36) est disposé radialement à l'extérieur de l'élément de vilebrequin (31) par rapport à l'axe du moteur (1) de la turbine à gaz.

4. Dispositif selon une des revendications n° 1 à n° 3, **caractérisé en ce que** l'élément de vilebrequin (31) comprend au moins un premier élément de came (41) et un second (42), sachant que le troisième levier (39) est articulé au niveau du premier élément de came (41) et que l'actionneur (32) est couplé au second élément de came (42).

5. Dispositif selon une des revendications n° 1 à n° 4, **caractérisé en ce que** l'actionneur (32) est relié à l'élément de vilebrequin (31) par le biais d'un levier intermédiaire (43).

6. Dispositif selon une des revendications n° 1 à n° 5, **caractérisé en ce que** sont prévues plusieurs bagues d'ajustage d'aubes directrices (29) qui sont couplées à l'élément de vilebrequin (31) respectivement au moyen d'un premier levier (34), d'un deuxième (36) et d'un troisième (39).

7. Dispositif selon une des revendications n° 1 à n° 6, **caractérisé en ce que** ledit dispositif est conçu pour convertir un mouvement linéaire de l'actionneur (32) en une rotation non-linéaire de la bague d'ajustage d'aubes directrices (29).

8. Dispositif selon une des revendications n° 1 à n° 7, **caractérisé en ce que** les longueurs du premier levier (34), du deuxième (36) et du troisième (39) sont conçues pour former un engrenage avec un rapport de transmission distinctement non constant.
